# EUROPEAN PATENT APPLICATION

(11) **EP 3 361 632 A1**
(43) Date of publication of application: **15.08.2018**
(21) Application number: 18155505.3
(22) Date of filing: 07.02.2018
(51) Int. Cl.: H02S 50/15

(54) **METHOD AND DEVICE FOR EVALUATING POWER STATION**

(30) Priority: 14.02.2017 CN 201710077861
(71) Applicant: Ching-Chieh, Lin, 114 Taipei City (TW)
(72) Inventor: Ching-Chieh, Lin, 114 Taipei City (TW)
(74) Representative: Friese Goeden Patentanwälte PartGmbB

(57) **Abstract**

A method for evaluating a power station includes the following steps. Electroluminescence is performed for a plurality of solar cell modules arranged on the power station, such that the solar cell modules emit light. An image capturing is performed for the solar cell modules, so as to obtain an electroluminescence image. The electroluminescence image or an analysis result inputted by a user according to the electroluminescence image is identified, so as to determine a non-defective area and a defective area of each of solar cell modules in the electroluminescence image. An analogy analysis is performed for the non-defective areas and the defective areas of all solar cell modules in the electroluminescence image, so as to evaluate the generation loss of the power station.

## Description

### Cross Reference to Related Application

This application claims the priority benefit of China Patent Application Number 201710077861.3, filed on February 14, 2017 the full present disclosure of which is incorporated herein by reference.

### BACKGROUND

### Technical Field

This present disclosure generally relates to a method and a device for evaluating, more particularly, to a method and a device for evaluating a power station.

### Related Art

Solar cells are extensive applied in many fields. In the industrial or commercial industries that require a large amount of electric energy, a large installation area is required to effectively improve the use efficiency.

Solar cells interconnecting with each other may constitute a solar module and may further constitute a solar power station. The power generated by the solar modules in the power station is converted by a converter and then is collected through a junction box. The collected power is then transmitted to electrical appliances to be used or user terminals.

Inspection on the solar cells of the solar power station is required to maintain the normal using state of the solar power station. For example, the normal and damaged solar cells in the power station may be distinguished by manually identifying the images of the solar cells photographed when the cells are energized. The maintaince may be acheieved by replacing the damaged solar cells. However, substitution of all the damaged solar cells manually identified by the images may greatly increase the maintenance cost. Therefore, the maintenance of the solar power station still require improvement.

### SUMMARY

In view of this, the present disclosure provides a method and a device for evaluating a power station, such that the power generation loss of the power station may be evaluated effectively and the improvement information of the power station may be further provided, thereby increasing the convenience of the user and effectively controlling and saving the maintenance cost.

The present disclosure provides a method for evaluating a power station adapted to a device for evaluating a power station. The method for evaluating the power station includes the following steps. Electroluminescence is performed for a plurality of solar cell modules arranged on the power station, such that the solar cell modules emit light. Image capturing is performed for the solar cell modules, so as to obtain an electroluminescence image. The electroluminescence image or an analysis result inputted by a user according to the electroluminescence image is identified, so as to determine a non-defective area and a defective area of each of solar cell modules in the electroluminescence image. An analogy analysis is performed for the non-defective areas and the defective areas of all solar cell modules in the electroluminescence image, so as to evaluate the generation loss of the power station.

In one embodiment, the step of performing the analogy analysis for the non-defective areas and the defective areas of all solar cell modules in the electroluminescence image, so as to evaluate the generation loss of the power station includes the following step. An electrical characteristic analogy analysis is performed for the non-defective areas and the defective areas of all solar cell modules in the electroluminescence image through a circuit analogy or voltage and current curves stacked in series and parallel, so as to evaluate the generation loss of the power station.

In one embodiment, the method for evaluating the power station further includes the following steps. All or a part of the solar cell modules having a larger area of the non-defective areas are rearranged and/or all or a part of the solar cell modules having a larger area of the non-defective areas are rearranged and all or a part of the solar cell modules having a larger area of the defective areas are replaced, so as to calculate a plurality of improvement information of the power station.

In one embodiment, the improvement information comprises a replacement location, a replacement quantity, a power generation loss, an annual loss, an annual gain, testing and maintenance costs and an internal rate of return.

In one embodiment, larger non-defective areas in the solar cell modules have higher power generation of solar cell modules, and lower non-defective areas in the solar cell modules have lower power generation of solar cell modules.

The present disclosure provides a device for evaluating a power station, including an electroluminescence unit, an image capturing unit, an identifying unit and a processing unit. The electroluminescence unit performs electroluminescence for a plurality of solar cell modules arranged on the power station, such that the solar cell modules emit light. The image capturing unit performs an image capturing for the solar cell modules, so as to obtain an electroluminescence image. The identifying unit identifies the electroluminescence image or an analysis result inputted by a user according to the electroluminescence image, so as to determine a non-defective area and a defective area of each of solar cell modules in the electroluminescence image. The processing unit is coupled to the identifying unit, and performs an analogy analysis for the non-defective areas and the defective areas of all solar cell modules in the electroluminescence image, so as to evaluate the generation loss of the power station.

In one embodiment, the processing unit performs an electrical characteristic analogy analysis for the non-defective areas and the defective areas of all solar cell modules in the electroluminescence image through a circuit analogy or voltage and current curves stacked in series and parallel, so as to evaluate the generation loss of the power station.

In one embodiment, the processing unit rearranges all or a part of the solar cell modules having a larger area of the non-defective areas and/or rearranges all or a part of the solar cell modules having a larger area of the non-defective areas and replaces all or a part of the solar cell modules having a larger area of the defective area, so as to calculate a plurality of improvement information of the power station.

In one embodiment, the improvement information comprises a replacement location, a replacement quantity, a power generation loss, an annual loss, an annual gain, testing and maintenance costs and an internal rate of return.

In one embodiment, larger non-defective areas in the solar cell modules have higher power generation of solar cell modules, and lower non-defective areas in the solar cell modules have lower power generation of solar cell modules.

In one embodiment, when the identifying unit identifies the electroluminescence image, the identifying unit is coupled to the image capturing unit.

In one embodiment, when identifying unit identifies the analysis result inputted by the user according to the electroluminescence image, the device for evaluating the power station further includes a displaying unit and a user inputting interface. The displaying unit is coupled to the image capturing unit, and receives the electroluminescence image and displays the electroluminescence image. The user inputting interface is coupled to the identifying unit, and receives the analysis result inputted by the user according to the electroluminescence image and transmits the analysis result to the identifying unit.

According to the method and the device for evaluating the power station of the present disclosure, the electroluminescence is performed for the plurality of solar cell modules arranged on the power station, such that the solar cell modules emit light, the image capturing is performed for the solar cell modules, so as to obtain the electroluminescence image. Then, the non-defective area and the defective area of each of solar cell modules in the electroluminescence image is identified, and the analogy analysis is performed for the non-defective areas and the defective areas of all solar cell modules in the electroluminescence image, so as to evaluate the generation loss of the power station. Additionally, the present disclosure may further rearrange all or a part of the solar cell modules having a larger area of the non-defective areas and/or rearrange all or a part of the solar cell modules having a larger area of the non-defective areas and replace all or a part of the solar cell modules having a larger area of the defective areas, so as to calculate a plurality of improvement information of the power station. Therefore, not only the power generation loss of the power station may be evaluated effectively, but also the improvement information of the power station may be further provided, thereby increasing the convenience of the user and effectively controlling and saving the maintenance cost.

It should be understood, however, that this summary may not contain all aspects and embodiments of the present invention, that this summary is not meant to be limiting or restrictive in any manner, and that the invention as disclosed herein will be understood by one of ordinary skill in the art to encompass obvious improvements and modifications thereto.

### BRIEF DESCRIPTION OF THE DRAWINGS

The features of the exemplary embodiments believed to be novel and the elements and/or the steps characteristic of the exemplary embodiments are set forth with particularity in the appended claims. The Figures are for illustration purposes only and are not drawn to scale. The exemplary embodiments, both as to organization and method of operation, may best be understood by reference to the detailed description which follows taken in conjunction with the accompanying drawings in which:
FIG. 1 shows a flowchart of a method for evaluating the power station according to an embodiment of the present disclosure;
FIGs. 2A and 2B show circuit diagrams of equivalent circuit transformed by solar cells of solar cell modules and the solar cell modules according to an embodiment of the present disclosure, respectively;
FIG. 3 shows another flowchart of a method for evaluating the power station according to an embodiment of the present disclosure;
FIG. 4 shows a schematic diagram of a device for evaluating a power station according to an embodiment of the present disclosure; and
FIG. 5 shows another schematic diagram of a device for evaluating a power station according to an embodiment of the present disclosure.

### DETAILED DESCRIPTION OF THE EMBODIMENTS

The present disclosure will now be described more fully hereinafter with reference to the accompanying drawings, in which exemplary embodiments of the invention are shown. This present disclosure may, however, be embodied in many different forms and should not be construed as limited to the embodiments set forth herein. Rather, these embodiments are provided so that this present disclosure will be thorough and complete, and will fully convey the scope of the present disclosure to those skilled in the art.

Certain terms are used throughout the description and following claims to refer to particular components. As one skilled in the art will appreciate, manufacturers may refer to a component by different names. This document does not intend to distinguish between components that differ in name but function. In the following description and in the claims, the terms "include/including" and "comprise/comprising" are used in an open-ended fashion, and thus should be interpreted as "including but not limited to". "Substaintial/substaintially" means, within an acceptable error range, the person skilled in the art may solve the technical problem in a certain error range to achieve the basic technical effect. Additionally the term "couple" or "connect" covers any direct or indirect electrically coupling means. Therefore when one device is electrically connected to another device in the context, that connection may be through a direct electrical connection, or through an indirect electrical connection via other devices and connections. The following description is of the best-contemplated mode of carrying out the invention. This description is made for the purpose of illustration of the general principles of the invention and should not be taken in a limiting sense. The scope of the invention is best determined by reference to the appended claims.

Moreover, the terms "include", "contain", and any variation thereof are intended to cover a non-exclusive inclusion. Therefore, a process, method, object, or device that includes a series of elements not only includes these elements, but also includes other elements not specified expressly, or may include inherent elements of the process, method, object, or device. If no more limitations are made, an element limited by "include a/an ..." does not exclude other same elements existing in the process, the method, the article, or the device which includes the element.

In the following embodiment, the same reference numerals is used to refer to the same or similar elements throughout.

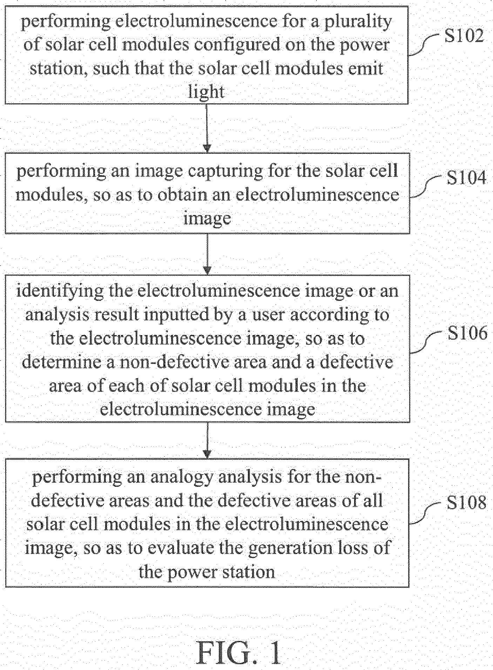

FIG. 1 shows a flowchart of a method for evaluating the power station according to an embodiment of the present disclosure. In the embodiment, the power station is arranged with a plurality of solar cell modules. The solar cell modules absorbs a sunlight and converts it into electrical energy, such that the power station may supply the power. The solar cell modules are, for example, composed of solar cells and the method for evaluating a power station is adapted to be performed by a device for evaluating a power station.

In step S102, performing electroluminescence for a plurality of solar cell modules arranged on the power station, such that the solar cell modules emit light. That is, the electroluminescence refers to that a forward bias voltage (a reverse current generated which is in the opposite direction when the power is generated under sunlight) is provided to the solar cell module, a current passes through the solar cell module, and the solar cell module may emit a near infrared light like a light emitting diode. The intensity of the light emitted by the solar cell module is related to the defects thereof. The defects would weaken the light of the solar cell weakened, or block the current such that some areas do not light. That is, the light intensity would be stronger if the part of defects is less, and the light intensity would be weaker if the part of defects is more.

In step S104, performing an image capturing for the solar cell modules, so as to obtain an electroluminescence image. That is, after performing the electroluminescence for the solar cell modules, the image capturing is performed for the solar cell modules through, for example, an charge coupled device (CCD) camera and a near infrared camera with indium gallium arsenide (InGaAS), so as to obtain the electroluminescence image.

In step S106, identifying the electroluminescence image or an analysis result inputted by a user according to the electroluminescence image, so as to determine a non-defective area and a defective area of each of solar cell modules in the electroluminescence image. That is, an image identification is performed for the electroluminescent image. For example, the electroluminescent image is divided into a plurality of areas. An entire luminance value of the image of each of areas is calculated, and each luminance value is compared with a predetermined threshold, so as to distinguish the non-defective area and the defective area in the electroluminescence image. Further, when each luminance value is greater than the predetermined threshold, it is identified as the non-defective area (such as a bright area). When each luminance value is smaller than the predetermined threshold, it is identified as the defective area (such as a dark area, crack or other defects).

Additionally, not only the electroluminescent image may be directly identified, but also the analysis result inputted by the user according to the electroluminescence image may be identified. That is, after the electroluminescence image is obtained, the electroluminescence image may be displayed to the user, such that the user may analyze the electroluminescence image. Then, the user may input the analysis result, so as to determine the non-defective area and the defective area of each of solar cell modules in the electroluminescence image. In the embodiment, larger non-defective areas in the solar cell modules have higher power generation of solar cell modules, and lower non-defective areas in the solar cell modules have lower power generation of solar cell modules, i.e. the solar cell modules are defective.

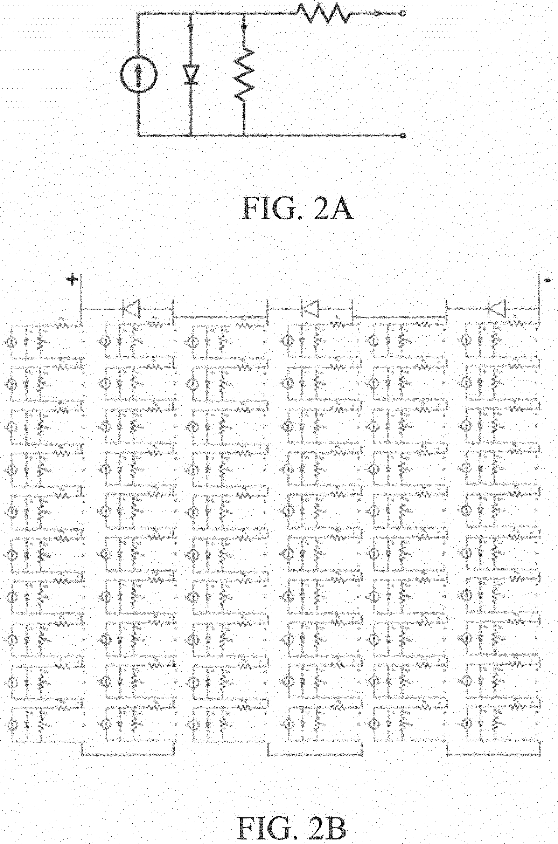

In step S108, performing an analogy analysis for the non-defective areas and the defective areas of all solar cell modules in the electroluminescence image, so as to evaluate the generation loss of the power station. In one embodiment, for example, each of the solar cell modules and each of the solar cells of the solar modules are converted into equivalent circuits by a circuit analogy, as shown in FIGS. 2A and 2B. All of the equivalent circuits are combined, and an electrical characteristic analogy analysis is performed for the combined equivalent circuits, so as to evaluate the generation loss of the power station.

In another embodiment, for example, the voltage and current curves are stacked in series and parallel, i.e. the voltage and current curve corresponding to each of the solar cell modules are obtained, and all of the voltage and current curves corresponding to the solar cell modules are stacked in series and parallel and the electrical characteristic analogy analysis is performed for the stacked voltage and current curves, so as to evaluate the generation loss of the power station.

Therefore, the user may quickly obtain the using state of the power station through the above evaluated generation loss of the power station, and further evaluate the value of the power station, so as to increase the convenience of user and effectively control and save the maintenance cost.

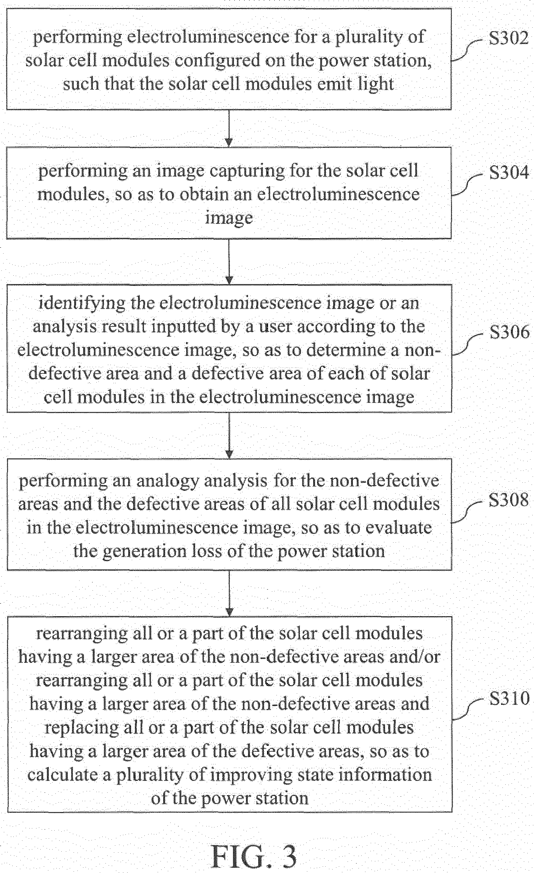

FIG. 3 shows another flowchart of a method for evaluating the power station according to an embodiment of the present disclosure.

Step S302 involves performing electroluminescence for a plurality of solar cell modules arranged on the power station, such that the solar cell modules emit light. Step S304 involves performing an image capturing for the solar cell modules, so as to obtain an electroluminescence image. Step S306 involves identifying the electroluminescence image or an analysis result inputted by a user according to the electroluminescence image, so as to determine a non-defective area and a defective area of each of solar cell modules in the electroluminescence image. Step S308 involves performing an analogy analysis for the non-defective areas and the defective areas of all solar cell modules in the electroluminescence image, so as to evaluate the generation loss of the power station.

Step S310 involves rearranging all or a part of the solar cell modules having a larger area of the non-defective areas and/or rearranging all or a part of the solar cell modules having a larger area of the non-defective areas and replacing all or a part of the solar cell modules having a larger area of the defective areas, so as to calculate a plurality of improvement information of the power station. That is, all or a part of the solar cell modules having a larger area of the non-defective areas are rearranged, i.e. all or a part of the solar cell modules with high generation power are newly connected in series and parallel, so as to calculate the improvement information corresponding to the power station at this time. Additionally, all or a part of the solar cell modules having a larger area (low generation power) of the defective areas are replaced to the normal (for example, high generation power) solar cell modules, the replaced solar cell modules and a part of the solar cell modules having a larger area of the non-defective areas are rearranged, i.e. the normal (for example, high generation power) solar cell modules and the solar cell modules having a larger area of the non-defective areas are newly connected in series and parallel, so as to calculate the improvement information of the power station.

In the embodiment, the improvement information comprises a replacement location, a replacement quantity, a power generation loss, an annual loss, an annual gain, testing and maintenance costs and an internal rate of return. The improvement information may be, for example, shown in Table 1.

**Table 1 improvement information corresponding to the power station**

| system state of power station | replacement quantity | power generation loss | annual loss | annual gain | testing and maintenance cost | internal rate of return (15 years IRR) |
|---|---|---|---|---|---|---|
| original state | - | -19.85% | - 668,982 | - | 0 | - |
| rearrangement | 0 | -17.02% | - 573,475 | 95,507 | 466,528 | 17.97% |
| rearrangement + replacement quantity of 80 | 80 | -13.41% | - 451,794 | 217,188 | 830,246 | 24.27% |
| rearrangement + replacement quantity of 120 | 120 | -10.78% | - 363,325 | 305,657 | 1,012,105 | 28.58% |
| rearrangement + replacement quantity of 160 | 160 | -9.47% | - 319,091 | 349,891 | 1,193,963 | 27.63% |
| rearrangement + replacement quantity of 400 | 400 | -9.47% | - 319,091 | 349,891 | 2,285,115 | 11.82% |

In Table 1, the units of the power generation loss, the annual loss, the annual gain are New Taiwan Dollar (NTD). Table 1 shows a number of improvements information for reference by the user to find the most cost-effective maintenance method. In Table 1, it can be seen that the power generation loss corresponding to the replacement quantity of 160 is the same as the power generation loss corresponding to the replacement quantity of 400, but the difference therebetween of inspection and maintenance cost is almost 1.09 million. Therefore, the user may select the replacement quantity of 160 without having to select the replacement quantity of 400, it still achieves the same improvement effect, so as to effectively control and save maintenance cost. Accordingly, in the embodiment, not only the power generation loss of the power station may be evaluated effectively, but also the improvement information of the power station may be further provided, thereby increasing the convenience of the user.

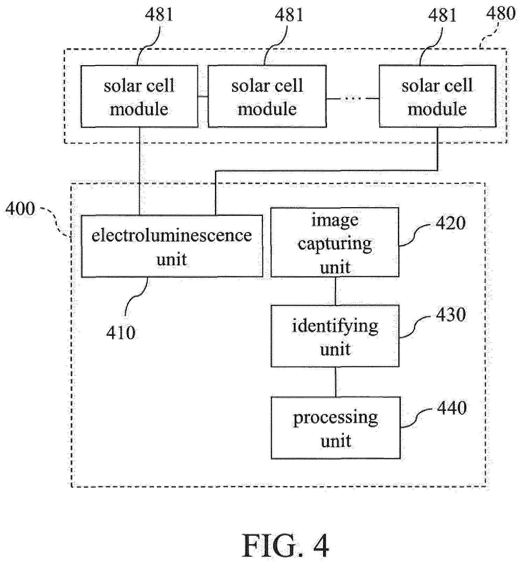

FIG. 4 shows a schematic diagram of a device for evaluating a power station according to an embodiment of the present disclosure. In the embodiment, the device for evaluating the power station 400 is adapted to evaluate the power of the power station 480. The power station 400 includes a plurality of solar cell modules 481, and the solar cell modules 481 are coupled to each other. Additionally, the solar cell modules 481 are, for example, composed of solar cells. In FIG. 4, the solar cell modules 481 are illustrated as being coupled in series, but not limited to the embodiment, the solar cell modules may also be coupled in parallel or coupled in series and parallel.

The device for evaluating the power station 400 includes an electroluminescence unit 410, an image capturing unit 420, an identifying unit 430 and a processing unit 440.

The electroluminescence unit 410 may be coupled to the solar cell modules 481 and perform electroluminescence for the solar cell modules 481 arranged on the power station 480, such that the solar cell modules 481 emit light.

The image capturing unit 420 performs an image capturing for the solar cell modules 481, so as to obtain an electroluminescence image.

The identifying unit 430 is coupled to the image capturing unit 420, identifies the electroluminescence image, so as to determine a non-defective area and a defective area of each of solar cell modules 481 in the electroluminescence image.

The processing unit 440 is coupled to the identifying unit 430, and performs an analogy analysis for the non-defective areas and the defective areas of all solar cell modules in the electroluminescence image, so as to evaluate the generation loss of the power station. Further, the processing unit 440 performs an electrical characteristic analogy analysis for the non-defective areas and the defective areas of all solar cell modules in the electroluminescence image through a circuit analogy or voltage and current curves stacked in series and parallel, so as to evaluate the generation loss of the power station. It may refer to the description of the above embodiment, and the description thereof is omitted.

Additionally, the processing unit 440 may further rearrange all or a part of the solar cell modules having a larger area of the non-defective areas and/or rearrange all or a part of the solar cell modules having a larger area of the non-defective areas and replace all or a part of the solar cell modules having a larger area of the defective area, so as to calculate a plurality of improvement information of the power station. The improvement information comprises a replacement location, a replacement quantity, a power generation loss, an annual loss, an annual gain, testing and maintenance costs and an internal rate of return, as shown in Table 1. Wherein larger non-defective areas in the solar cell modules have higher power generation of solar cell modules, and lower non-defective areas in the solar cell modules have lower power generation of solar cell modules.

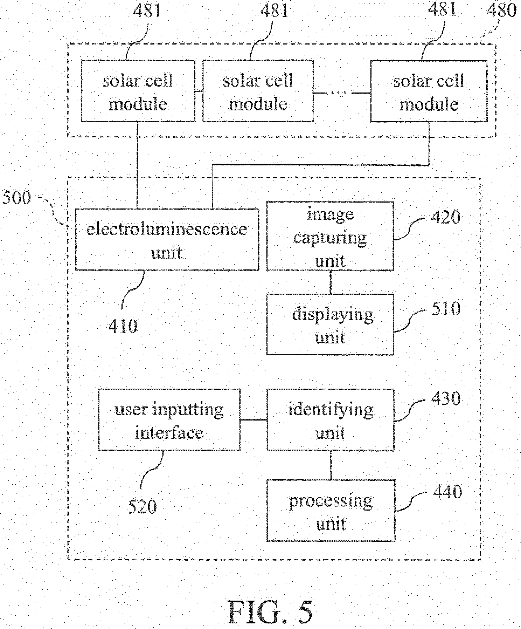

FIG. 5 shows another schematic diagram of a device for evaluating a power station according to an embodiment of the present disclosure. In the embodiment, the implementation of the power station 480 and the solar cell modules 481 is the same as the embodiment of FIG. 4. It may refer to the description of the embodiment of FIG. 4, and the description thereof is omitted. Additionally, in the embodiment, the device for evaluating the power station 500 includes the electroluminescence unit 410, the image capturing unit 420, the identifying unit 430 and the processing unit 440 in FIG. 4 and further includes a display unit 510 and a user inputting interface 520. The implementations of the electroluminescence unit 410, the image capturing unit 420, the identifying unit 430 and the processing unit 440 are the same as the embodiment of FIG. 4. They may refer to the description of the embodiment of FIG. 4, and the description thereof is omitted.

The displaying unit 510 is coupled to the image capturing unit 420, and receives the electroluminescence image and displays the electroluminescence image to the user, such that the user may analyze the electroluminescence image.

The user inputting interface 520 is coupled to the identifying unit 430, receives the analysis result inputted by the user according to the electroluminescence image and transmits the analysis result to the identifying unit 430, such that identifying unit 430 identifies a non-defective area and a defective area of each of solar cell modules 481 in the electroluminescence image accordingly.

In summary, according to the method and the device for evaluating the power station of the present disclosure, the electroluminescence is performed for the plurality of solar cell modules arranged on the power station, such that the solar cell modules emit light, the image capturing is performed for the solar cell modules, so as to obtain the electroluminescence image. Then, the non-defective area and the defective area of each of solar cell modules in the electroluminescence image is identified, and the analogy analysis is performed for the non-defective areas and the defective areas of all solar cell modules in the electroluminescence image, so as to evaluate the generation loss of the power station. Additionally, the present disclosure may further rearrange all or a part of the solar cell modules having a larger area of the non-defective areas and/or rearrange all or a part of the solar cell modules having a larger area of the non-defective areas and replace all or a part of the solar cell modules having a larger area of the defective areas, so as to calculate a plurality of improvement information of the power station. Therefore, not only the power generation loss of the power station may be evaluated effectively, but also the improvement information of the power station may be further provided, thereby increasing the convenience of the user and effectively controlling and saving the maintenance cost.

Although the present disclosure has been explained in relation to its preferred embodiment, it does not intend to limit the present disclosure. It will be apparent to those skilled in the art having regard to this present disclosure that other modifications of the exemplary embodiments beyond those embodiments specifically described here may be made without departing from the spirit of the invention. Accordingly, such modifications are considered within the scope of the invention as limited solely by the appended claims.

## Claims

1. Method for evaluating a power station, adapted to a device for evaluating a power station, wherein the method for evaluating the power station comprises:
performing electroluminescence for a plurality of solar cell modules arranged on the power station, such that the solar cell modules emit light;
performing an image capturing for the solar cell modules, so as to obtain an electroluminescence image;
identifying the electroluminescence image or an analysis result inputted by a user according to the electroluminescence image, so as to determine a non-defective area and a defective area of each of solar cell modules in the electroluminescence image; and
performing an analogy analysis for the non-defective areas and the defective areas of all solar cell modules in the electroluminescence image, so as to evaluate the generation loss of the power station.

2. Method for evaluating the power station according to claim 1, wherein the step of performing the analogy analysis for the non-defective areas and the defective areas of all solar cell modules in the electroluminescence image, so as to evaluate the generation loss of the power station comprises:
performing an electrical characteristic analogy analysis for the non-defective areas and the defective areas of all solar cell modules in the electroluminescence image through a circuit analogy or voltage and current curves stacked in series and parallel, so as to evaluate the generation loss of the power station.

3. Method for evaluating the power station according to any of the preceding claims, further comprising:
rearranging all or a part of the solar cell modules having a larger area of the non-defective areas and/or rearranging all or a part of the solar cell modules having a larger area of the non-defective areas and replacing all or a part of the solar cell modules having a larger area of the defective areas, so as to calculate a plurality of improvement information of the power station.

4. Method for evaluating the power station according to claim 3, wherein the improvement information comprises a replacement location, a replacement quantity, a power generation loss, an annual loss, an annual gain, testing and maintenance costs and an internal rate of return.

5. Method for evaluating the power station according to any of the preceding claims, wherein larger non-defective areas in the solar cell modules have higher power generation of solar cell modules, and lower non-defective areas in the solar cell modules have lower power generation of solar cell modules.

6. Device for evaluating a power station, comprising:
an electroluminescence unit, performing electroluminescence for a plurality of solar cell modules arranged on the power station, such that the solar cell modules emit light;
an image capturing unit, performing an image capturing for the solar cell modules, so as to obtain an electroluminescence image;
an identifying unit, identifying the electroluminescence image or an analysis result inputted by a user according to the electroluminescence image, so as to determine a non-defective area and a defective area of each of solar cell modules in the electroluminescence image; and
a processing unit, coupled to the identifying unit and performing an analogy analysis for the non-defective areas and the defective areas of all solar cell modules in the electroluminescence image, so as to evaluate the generation loss of the power station.

7. Device for evaluating a power station according to claim 6, wherein the processing unit performs an electrical characteristic analogy analysis for the non-defective areas and the defective areas of all solar cell modules in the electroluminescence image through a circuit analogy or voltage and current curves stacked in series and parallel, so as to evaluate the generation loss of the power station.

8. Device for evaluating a power station according to any of claims 6 to 7, wherein the processing unit rearranges all or a part of the solar cell modules having a larger area of the non-defective areas and/or rearranges all or a part of the solar cell modules having a larger area of the non-defective areas and replaces all or a part of the solar cell modules having a larger area of the defective area, so as to calculate a plurality of improvement information of the power station.

9. Device for evaluating the power station according to claim 8, wherein the improvement information comprises a replacement location, a replacement quantity, a power generation loss, an annual loss, an annual gain, testing and maintenance costs and an internal rate of return.

10. Device for evaluating the power station according to any of claims 6 to 9, wherein larger non-defective areas in the solar cell modules have higher power generation of solar cell modules, and lower non-defective areas in the solar cell modules have lower power generation of solar cell modules.

11. Device for evaluating the power station according to any of claims 6 to 10, wherein when the identifying unit identifies the electroluminescence image, the identifying unit is coupled to the image capturing unit.

12. Device for evaluating the power station according to any of claims 6 to 11, wherein when identifying unit identifies the analysis result inputted by the user according to the electroluminescence image, the device for evaluating the power station further comprises:
a displaying unit, coupled to the image capturing unit, and receiving the electroluminescence image and displaying the electroluminescence image; and
a user inputting interface, coupled to the identifying unit, receiving the analysis result inputted by the user according to the electroluminescence image and transmitting the analysis result to the identifying unit.
